# EUROPEAN PATENT APPLICATION

(11) **EP 1 292 135 A2**
(43) Date of publication of application: **12.03.2003**
(21) Application number: 02019854.5
(22) Date of filing: 09.09.2002
(51) Int. Cl.: H04N 5/76

(54) **Program record/playback system and program record/playback method**

(30) Priority: 10.09.2001 JP 2001273305
(71) Applicant: Pioneer Corporation, Tokyo-to (JP)
(72) Inventor: Yasushi, Mitsuo, Pioneer Corp., Sougou Kenkyusho, Saitama-ken (JP); Yanagidaira, Masatoshi, Pioneer Corp., Saitama-ken (JP)
(74) Representative: Klingseisen, Franz, Dipl.-Ing.

(57) **Abstract**

A program record and playback system (100) is provided with: a reception device (1) which receives broadcast program on a plurality of channels; a record and playback device (3) which records and plays back the received broadcast program; and a control device (12) which controls the reception, recording and playback of the broadcast program. The control device (12) has a broadcast contents determination device (21a) which determines contents of a broadcast program recorded by the record and playback device (3); a delimiter signal assignment device (21b) which assigns a delimiter signal to a breakpoint of the contents of the recorded broadcast program; and a playback instruction device (21d) which refers to the delimiter signal, and issues to the record and playback device (3) an instruction to play back the recorded broadcast program from the breakpoint of the contents.

## Description

### BACKGROUND OF THE INVENTION

### Field of the Invention:

The present invention relates to a program record and playback system for receiving, recording, and playing back a broadcast program of a radio broadcast or a television broadcast and, more specifically, to a program record and playback system allowing for a time shift playback in which a recorded portion of a program is arbitrarily selected and played back without suspending a recording operation.

### Description of the Related Art:

As an example of a prior art relating to a time shift playback of a broadcast program, Japanese Patent Laid-Open No. 5-328243 describes temporarily recording television programs in a storage medium and automatically playing them back in time periods specified by a user. Furthermore, Japanese Patent Laid-Open No. 2000-350130 describes realizing the time shift playback capability only by the control means providing simple control information such as a position of a picture for starting a time shift playback.

However, in the above-mentioned conventional program record and playback system, for example, when a broadcast program on a broadcast channel after switching is viewed by switching the broadcast channel of the currently viewed broadcast program into another broadcast channel, or when a broadcast program on a broadcast channel after switching is viewed a predetermined time back by the time shift playback, the broadcast program mostly starts in the middle of the program. Therefore, it is hard for an audience to immediately understand the contents of the broadcast program after switching broadcast channels. Additionally, if the broadcast program is a music program, an audience (a user) cannot be satisfied with listening to the music from the middle. Furthermore, in the conventional program record and playback system, it is difficult to perform a time shift playback by quickly selecting only the favorite contents of an audience.

### SUMMARY OF THE INVENTION

It is therefore an object of the present invention to provide a program record and playback system and a program record and playback method capable of providing a time shift playback with high convenience for a user.

The above object of the present invention can be achieved by a program record and playback system provided with: a reception device which receives broadcast program on a plurality of channels; a record and playback device which records and plays back the received broadcast program; and a control device which controls the reception, recording and playback of the broadcast program, wherein the control device is provided with: a broadcast contents determination device which determines contents of a broadcast program recorded by the record and playback device; a delimiter signal assignment device which assigns a delimiter signal to a breakpoint of the contents of the recorded broadcast program; and a playback instruction device which refers to the delimiter signal, and issues to the record and playback device an instruction to play back the recorded broadcast program from the breakpoint of the contents.

According to the present invention, the contents of a broadcast program recorded by a record and playback device, for example, sports, a CM (commercial), conversation, music, etc. are discriminated, and a delimiter signal is assigned to a breakpoint of the discriminated contents. By the delimiter signal is referred, an instruction to play back the recorded broadcast program from the breakpoint of the contents is issued to the record and playback device. Therefore, when a recorded broadcast program is played back with a time shift, the broadcast program can be played back from the breakpoint of the contents. Therefore, the user can easily understand the contents of the broadcast program. As a result, a time shift playback with high convenience for the user can be provided.

In one aspect of the program record and playback system of the present invention, the system is further provided with a broadcast channel switch input device for inputting an instruction to switch broadcast channels by a user, wherein when a broadcast channel switch instruction is input from the broadcast channel switch input device, the playback instruction device of the control device refers to a delimiter signal assigned to a breakpoint of contents of a broadcast program recorded on a broadcast channel after switching , and issues an instruction to play back the broadcast program from the breakpoint of the contents to the record and playback device.

According this aspect, when a user is switching from a broadcast program on a specific broadcast channel into another program on another broadcast channel, the broadcast program on the broadcast channel after switching is played back with a time shift from the breakpoint of the contents. Therefore, although a broadcast channel is switched in the middle of a specific contents of a broadcast program, the program is not played back from the middle, but is played back from the breakpoint. Therefore, the user can easily understand the contents of the broadcast program. As a result, a time shift playback can be provided with high convenience for the user.

In another aspect of the program record and playback system of the present invention, the system is further provided with a liking information database for storing user liking information about the broadcast program, wherein the control device further comprises a record instruction device which sets a broadcast program to be recorded based on the information stored in the liking information database, issues an instruction to receive the set broadcast program to the reception device, and issues an instruction to record the set broadcast program to the record and playback device.

According this aspect, a broadcast program to be recorded by the record and playback device is set based on the information stored in the liking information database. Therefore, only user favorite broadcast programs can be recorded, thereby preventing the storage capacity from being used for unnecessary broadcast programs.

In further aspect of the program record and playback system of the present invention, the system is further provided with a broadcast channel switch input device for inputting an instruction to switch broadcast channels by a user, wherein when a broadcast channel switch instruction is input from the broadcast channel switch input device if a broadcast program on a broadcast channel after switching has been recorded, the playback instruction device of the control device refers to a delimiter signal assigned to a breakpoint of contents of the broadcast program and issues an instruction to play back the broadcast program from the breakpoint of the contents to the record and playback device.

According this aspect, although a broadcast channel is switched in the middle of a specific contents of a broadcast program, the program is not played back from the middle, but is played back from the breakpoint. Therefore, the user can easily understand the contents of the broadcast program.

In further aspect of the program record and playback system of the present invention, the broadcast program set by the record instruction device is referred to as a program on a back-channel.

A program on a back-channel is a program currently broadcast on a broadcast channel different from the program currently viewed by the user.

In further aspect of the program record and playback system of the present invention, the control device is further provided with database update device which updates information stored in the liking information database based on operation contents of the user.

According this aspect, the information more correctly reflecting the liking of a user can be accumulated.

In further aspect of the program record and playback system of the present invention, the system is further provided with a breakpoint input device for inputting an instruction to specify at least one breakpoint out of breakpoints of contents of the broadcast program by the user, wherein the playback instruction device issues an instruction to play back the broadcast program from the breakpoint specified to the record and playback device.

According this aspect, a broadcast program can be played back from the user-desired position of a breakpoint, thereby further improving the convenience.

In further aspect of the program record and playback system of the present invention, the delimiter signal is discriminated depending on contents of the broadcast program, the playback instruction device excludes specific contents in the broadcast program based on the delimiter signal, and issues the instruction to play back the broadcast program from the breakpoint of the contents.

According this aspect, a user can perform a time shift playback excluding the contents not desired by the user in the broadcast program, thereby preventing the laborious process of fast-forwarding undesired contents, for example.

In further aspect of the program record and playback system of the present invention, the system is further provided with a user history database for storing an operation history of the user, wherein the playback instruction device sets the contents to be excluded based on the information stored in the user history database.

According this aspect, contents to be excluded can be automatically set based on the operation performed by the user in the past.

In further aspect of the program record and playback system of the present invention, the system is further provided with an exclusion contents input device for inputting an instruction to specify the contents to be excluded by the user, wherein the playback instruction device sets the contents to be excluded based on the instruction from the exclusion contents input device.

According this aspect, contents to be excluded by the user can be specified.

In further aspect of the program record and playback system of the present invention, the delimiter signal is discriminated depending on the contents of the broadcast program, the playback instruction device sets specific contents of the broadcast program based on the delimiter signal, and issues the instruction to play back only the set contents from the breakpoint.

According this aspect, since the user can play back only the favorite contents of a broadcast program with a time shift, the laborious process of searching for the user favorite contents can be reduced.

In further aspect of the program record and playback system of the present invention, the system is further provided with a liking information database for storing user liking information about the broadcast program, wherein the playback instruction device sets the specific contents based on the information stored in the liking information database.

According this aspect, the contents to be played back can be automatically set based on the operation performed in the past by the user.

In still further aspect of the program record and playback system of the present invention, the system is further provided with a set contents input device for inputting an instruction to specify the contents to be set by the user, wherein the playback instruction device sets the specific contents based on the instruction from the set contents input device.

According this aspect, the user's favorite contents can be specified.

The above object of the present invention can be achieved by a program record and playback method provided with: a process of receiving broadcast program on a plurality of broadcast channels; a process of recording the received broadcast program; a process of determining contents of the recorded broadcast program; a process of assigning a delimiter signal to a breakpoint of the contents of the recorded broadcast program; and a process of referring to the delimiter signal, and playing back the recorded broadcast program from the breakpoint of the contents.

According to the present invention, the user can easily understand the contents of the broadcast program. As a result, a time shift playback with high convenience for the user can be provided.

In one aspect of the program record and playback method of the present invention, when a broadcast channel switch instruction is input from a broadcast channel switch input device, a delimiter signal assigned to a breakpoint of contents of a broadcast program recorded on a broadcast channel after switching is referred, the broadcast program is played back from the breakpoint of the contents.

In another aspect of the program record and playback method of the present invention, the method is further provided with a process of setting the broadcast program to be recorded based on a user liking information about the broadcast program.

In further aspect of the program record and playback method of the present invention, when a broadcast channel switch instruction is input if a broadcast program on a broadcast channel after switching has been recorded, a delimiter signal assigned to a breakpoint of contents of the broadcast program is referred, and the broadcast program is played back from the breakpoint of the contents.

### BRIEF DESCRIPTION OF THE DRAWINGS

FIG. 1 shows an example of the outline of the configuration of a vehicle audio system according to an embodiment of the present invention;
FIG. 2 shows an example of an internal configuration of a system control unit 12;
FIG. 3 shows a concept of assigning a delimiter signal to a breakpoint of the contents of a broadcast program;
FIGs. 4A and 4B show an example of a time shift playback from a breakpoint of the contents of a broadcast program recorded in a broadcast program record and playback unit 3 when a broadcast channel switch instruction is input;
FIGs. 5A and 5B show an example of a time shift playback from a breakpoint of a specific contents of a broadcast program excluding a specific contents in the broadcast program recorded in a broadcast program record and playback unit 3 when a broadcast channel switch instruction is input;
FIG. 6 shows an example of the appearance of an operation unit 15;
FIG. 7 is a flowchart of the process performed by a CPU 21 on the portion of a system control unit 12 related to the present invention; and
FIG. 8 is a flowchart of a broadcast contents determining process in step S4 shown in FIG. 7.

### DETAILED DESCRIPTION OF THE PREFERRED EMBODIMENTS

The preferred embodiments of the present invention are described below by referring to the attached drawings. The following explanation describes an embodiment of applying a program record and playback (reproduction) system according to the present invention relating to a vehicle audio system.

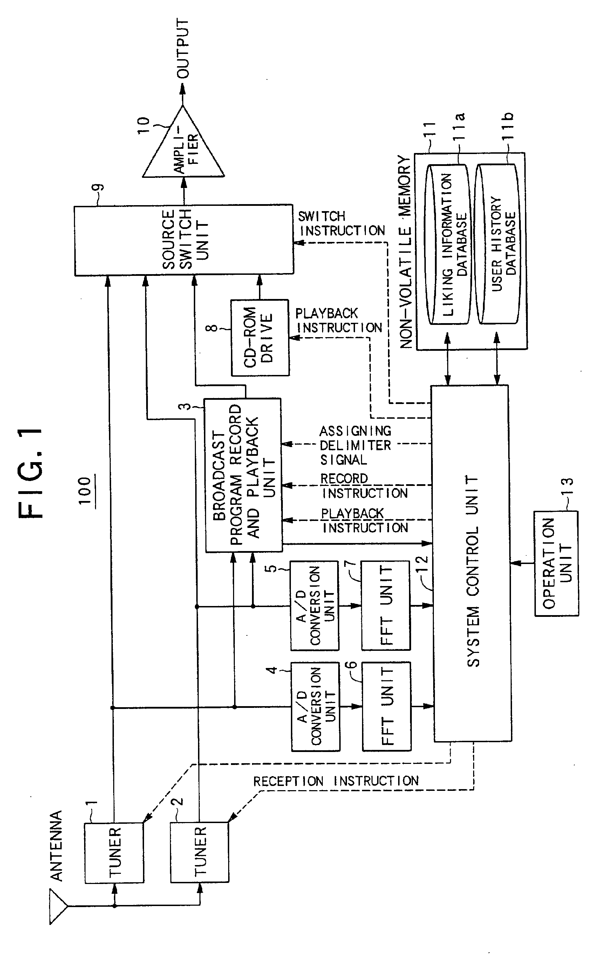

First, the configuration and the function of the vehicle audio system according to the present embodiment is described below by referring to FIGS. 1 to 6.

FIG. 1 shows an example of the outline of the configuration of the vehicle audio system according to the present embodiment. As shown in FIG. 1, vehicle audio system 100 includes tuners 1 and 2, a broadcast program record and playback unit 3, A (analog)/D (digital) conversion units 4 and 5, FFT (fast Fourier transform) units 6 and 7, CD-ROM drive 8, a source switch unit 9, an amplifier 10, a non-volatile memory 11, a system control unit 12, and an operation unit 13.

The tuners 1 and 2 have the function of the reception device according to the present invention, and receives a broadcast program provided by a broadcast station. Practically, the tuners 1 and 2 is configured by a front end such as an RF (radio frequency) amplification circuit and a tuner not shown in the attached drawings, a detector, an intermediate frequency amplification circuit, a PLL (phase-locked loop) circuit, etc. With the above-mentioned configuration of the tuners 1 and 2, a broadcast program from a broadcast station is input into the tuners 1 and 2 as an RF signal through an antenna. The RF signal input into the tuners 1 and 2 is amplified by the RF amplification circuit, and provided for the front end. In the front end, the RF signal is converted into an intermediate frequency signal by tuning the frequency to the phase lock frequency set by the PLL circuit, and is provided for the intermediate frequency amplification circuit.

In this example, the PLL circuit is provided with a phase comparator, an LPF (low pass filter), a VCO (voltage-controlled oscillator), a frequency divider, etc., forms what is called a phase locked loop, and sets a phase lock frequency for reception of a broadcast program according to an instruction to receive a broadcast program on a specific broadcast channel from the system control unit 12.

The intermediate frequency signal provided for the intermediate frequency amplification circuit is amplified by the circuit, and provided for a detector. The amplified intermediate frequency signal is demodulated by the detector. The demodulated signal (voice signal) is provided for the broadcast program record and playback unit 3, the A/D conversion units 4 and 5, and the source switch unit 9.

In the present embodiment, a broadcast program is a radio broadcast program including various programs such as music, sports, varieties, talks, etc.

The broadcast program record and playback unit 3 has the function of the record and playback device according to the present invention, and records a broadcast program (voice signal) received and provided by the tuners 1 and 2. The broadcast program record and playback unit 3 is configured by, for example, a large capacity storage device having a recording system and a playback system such as a well-known HDD (hard disk) device, etc. The broadcast program record and playback unit 3 can record all broadcast programs provided by the tuners 1 and 2. However, according to the present embodiment, a part of broadcast programs are recorded with the storage capacity taken into account. The broadcast programs to be recorded by the broadcast program record and playback unit 3 is set by the system control unit 12, but the details are described later.

The broadcast program record and playback unit 3 outputs a recorded broadcast program as a voice signal to the source switch unit 9 according to a playback instruction from the system control unit 12, that is, plays back a recorded broadcast program, thereby performing a time shift playback.

The system control unit 12 controls recording a broadcast program to the broadcast program record and playback unit 3 using a file pointer for recording, and controls playback of a broadcast program from the broadcast program record and playback unit 3 using a file pointer for playback. Thus, any portion of the recorded broadcast programs can be optionally selected and played back without interruption of the recording operation.

The A/D conversion units 4 and 5 convert a voice signal provided by the tuners 1 and 2 into a digital signal in a predetermined period of a sampling clock, and provide the signal for the FFT units 6 and 7.

The FFT units 6 and 7 perform a fast Fourier transform on the digital signal provided by the A/D conversion units 4 and 5 at predetermined intervals, for example, every second, and provides the output spectrum data for the system control unit 12.

CD-ROM is mounted to the CD-ROM drive 8 as freely removable and attachable. The CD-ROM drive 8 outputs the voice signal recorded on the CD-ROM to the source switch unit 9 according to a playback instruction from the system control unit 12.

The source switch unit 9 selects any of the voice signal output from the tuners 1 and 2, the voice signal output from the broadcast program record and playback unit 3, and the voice signal output from the CD-ROM drive 8 according to a switch instruction from the system control unit 12, and outputs the selected signal. The voice signal output from the source switch unit 9 is amplified at the amplifier 10, and output as a voice signal (including music) from a speaker.

The non-volatile memory 11 is formed by, for example, a freely removable and attachable card-type storage medium, etc. The memory logically contains a liking information database 11a and a user history database 11b. The liking information database 11a stores user liking information about broadcast programs, for example, liking for baseball, football, music, etc. The user history database 11b stores the operation history of the user in the vehicle audio system 100, for example, the history of removing (cutting off) and playing back CM programs in the past, etc.

The non-volatile memory 11 also stores a program guide to be broadcast. The program guide can be properly stored by a user in the non-volatile memory 11, but can be received from the information distribution server connected to Internet through a mobile communications network with communications capabilities implemented in the vehicle audio system 100, and can be stored.

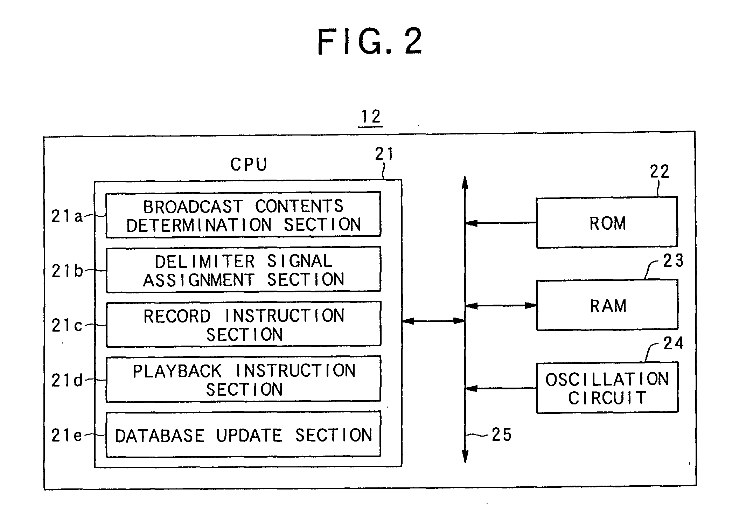

The system control unit 12 has the function of the control device according to the present invention, and controls receiving, recording and playing back a broadcast program. FIG. 2 shows an example of the internal configuration of the system control unit 12. As shown in FIG. 2, the system control unit 12 includes a CPU 21, ROM 22 storing a program and data for control of each operation, RAM 23 used as a work area for temporary storage of spectrum data, etc. from the FFT units 6 and 7, an oscillation circuit 24, etc. Each component is interconnected through a bus 25. A program stored by the ROM 22 uses the CPU 21 as a broadcast contents determination section 21a functioning as the broadcast contents determination device, a delimiter signal assignment section 21b functioning as the delimiter signal assignment device, a record instruction section 21c functioning as the record instruction device, a playback instruction section 21d functioning as the playback instruction device, and a database update section 21e functioning as the database update device of the present invention.

The broadcast contents determination section 21a has the function of determining the contents of a broadcast program stored in the broadcast program record and playback unit 3 based on the spectrum data provided by the FFT units 6 and 7. According to the present embodiment, the contents of broadcast programs determined by the broadcast contents determination section 21a are four variations, that is, news, talks, music, and CM. Music includes all kinds such as pops, classics, jazz, etc. Music is broadcast in normal music programs and commercials.

As a method of determining the contents of these broadcast programs, for example, when a signal band is a broad frequency band, the program is determined to be a music or a CM program. On the other hand, if a signal band is a narrow frequency band (for example, the signal band is mainly the frequency of 1 kHz), the program is determined to be a news or a talk program.

Furthermore, the discrimination between music and CM can be performed depending on the distribution of a broad frequency band as to whether or not it continues for 1 or more minutes. In the case of CM, broadcast music normally continues only within 1 minute.

The discrimination between news and talks can be performed depending on, for example, audibility. Normally, news is given by an announcer, the consonants are clearer and the fluctuation of tone is smaller, thereby indicating high audibility. On the other hand, the consonants are unclear, the talking speed is high, and the fluctuation of tone is large in the conversation in a talk program, thereby indicating low audibility.

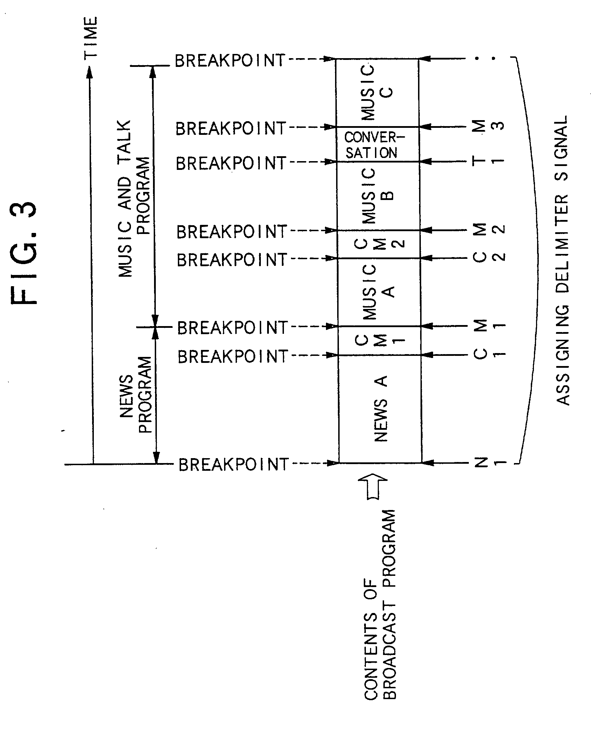

The delimiter signal assignment section 21b has the function of assigning a delimiter signal to a breakpoint of the contents of a broadcast program recorded in the broadcast program record and playback unit 3. FIG. 3 shows the concept of assigning a delimiter signal to a breakpoint of the contents of a broadcast program. A breakpoint of the contents of a broadcast program is located as shown in FIG. 3, and is clear when the contents of the broadcast program is determined. The delimiter signal is assigned to the breakpoint of the contents of a broadcast program as shown in FIG. 3.

The delimiter signal is discriminated depending on the contents of a broadcast program. For example, in the example shown in FIG. 3, a delimiter signal of "N1" is assigned to the start of news A, a delimiter signal of "C1" is assigned to the start of CM1, and a delimiter signal of "M1" is assigned to the start of music A. Thus, by discriminating these delimiter signals depending on the contents of broadcast programs, each breakpoint can clearly indicate the type of contents.

The record instruction section 21c sets a broadcast program to be recorded in the broadcast program record and playback unit 3, issues an instruction to receive the set broadcast program to at least one of the tuners 1 and 2, and issues an instruction to record the set broadcast program to the broadcast program record and playback unit 3. The instruction to record a broadcast program is issued using a file pointer for recording.

A broadcast program to be recorded is set based on user liking information about broadcast programs stored in the liking information database 11a in the non-volatile memory 11. For example, when there is information (history) that a user likes music programs in the liking information database 11a, the record instruction section 21c refers to the program guide stored in the non-volatile memory 8, and sets a music program to be broadcast as a broadcast program to be recorded. Thus, only set broadcast programs are recorded in the broadcast program record and playback unit 3. Therefore, it is possible to prevent unnecessary broadcast programs from being recorded using storage capacity (wasteful storage). Furthermore, overdischarge of a vehicle battery can also be avoided.

The playback instruction section 21d refers to the delimiter signal assigned to the breakpoint of the contents of the broadcast program recorded in the broadcast program record and playback unit 3, and issues an instruction to play back the broadcast program from the breakpoint of the contents to the broadcast program record and playback unit 3. In this example, the instruction to play back a broadcast program is issued using a file pointer for playback. The playback instruction section 21d moves the file pointer for playback from a time point to the breakpoint of the contents of a recorded broadcast program, and starts playback from the position of the breakpoint.

If a broadcast program is recorded in the broadcast program record and playback unit 3 on the broadcast channel after switching when an instruction to switch a broadcast channel is input from the operation unit 13, the playback instruction section 21d has the function of referring to the delimiter signal assigned to the breakpoint of the contents of the broadcast program, and issuing an instruction to the broadcast program record and playback unit 3 and the source switch unit 9 to play back the broadcast program from the breakpoint of the contents.

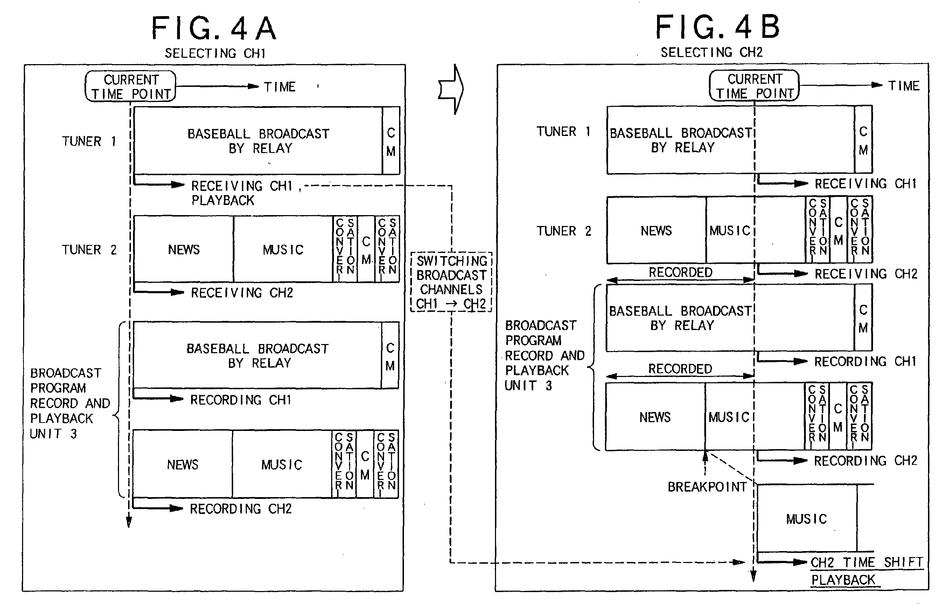

FIGs. 4A and 4B show an example of playing back a broadcast program recorded in the broadcast program record and playback unit 3 from the breakpoint of the contents with a time shift playback when an instruction to switch a broadcast channel is input. As shown in FIG. 4A, the tuner 1 receives a broadcast program on the broadcast channel 1 (CH1), and the tuner 2 receives a broadcast program on the broadcast channel 2 (CH2), and the broadcast programs received by the tuners 1 and 2 are recorded in the broadcast program record and playback unit 3.

In the example shown in FIG. 4A, the broadcast channel 1 (CH1) is selected, that is, the operation unit 13 sets the broadcast channel 1 (CH1), and the source switch unit 9 outputs a voice signal from the tuner 1. Thus, the broadcast program (a baseball broadcast by relay) received by the tuner 1 is output (played back) by a speaker through the amplifier 10.

When an instruction to switch broadcast channels is input from the operation unit 13 in the above-mentioned state, the source switch unit 9 is switched into the state of outputting a voice signal from the broadcast program record and playback unit 3, and the broadcast program received by the tuner 2 and recorded in the broadcast program record and playback unit 3 is played back from the breakpoint of the contents with a time shift shown in FIG. 4B.

Thus, when a program on a back-channel is a music program, the music is not played back from the middle although the broadcast channel is switched in the middle of the music, but the music can be played back from the start, that is, the breakpoint, thereby pleasing the user. If a program on a back-channel is a news or talk program, the news or talks can be played back from the start, that is, the breakpoint although the broadcast channel is switched in the middle of the news or talks, thereby allowing the user to clearly understand the contents. Therefore, a time shift playback can be provided for the user with high convenience.

In the example shown in FIG. 4, a broadcast program is received by the tuner 2 and recorded in the broadcast program record and playback unit 3. If a broadcast program received by the tuner 2 is not recorded in the broadcast program record and playback unit 3, then the source switch unit 9 is switched into the state of outputting a voice signal from the tuner 2.

When the broadcast channel is switched as mentioned above, the playback instruction section 21d issues to the broadcast program record and playback unit 3 an instruction to play back the broadcast program from the breakpoint specified by the operation unit 13.

For example, the playback instruction section 21d specifies a breakpoint indicated by one of the delimiter signals "N1", "C1", "M1", ... in FIG. 2.

Thus, since a broadcast program can be played back from the breakpoint desired by a user, the convenience can be further improved. The method of specifying a breakpoint by the operation unit 13 is described later.

When a broadcast channel is switched as mentioned above, the playback instruction section 21d excludes (cutoff) a specific contents of a broadcast program based on the delimiter signal, and outputs an instruction to play back the broadcast program from the breakpoint of the specific contents.

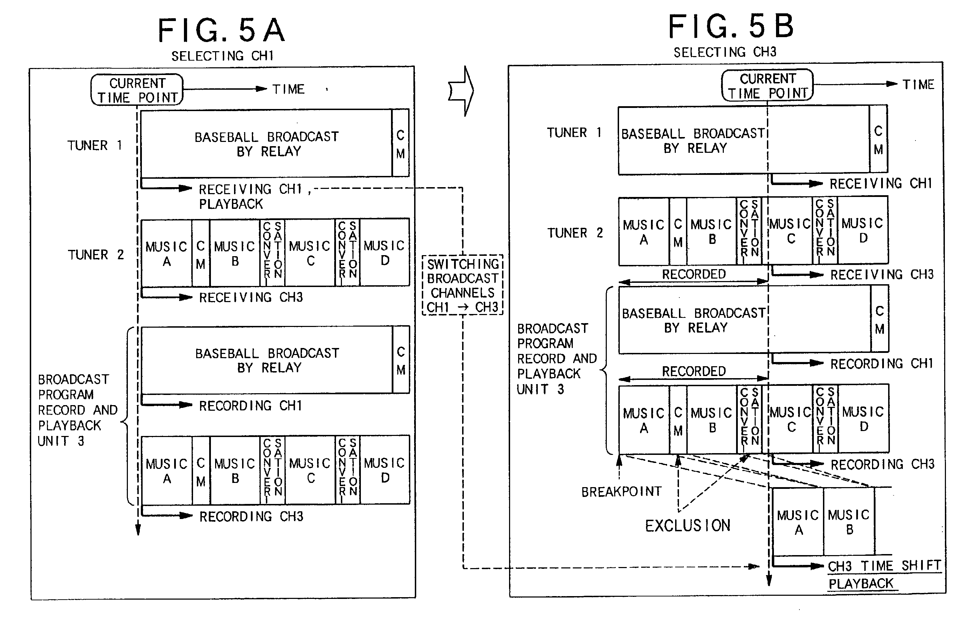

FIGs. 5A and 5B show an example of a time shift playback from a breakpoint of a specific contents of a broadcast program excluding a specific contents in the broadcast program recorded in the broadcast program record and playback unit 3 when a switch instruction of a broadcast channel is input.

As shown in FIG. 5A, the tuner 1 receives a broadcast program on the broadcast channel 1 (CH1), and the tuner 2 receives a broadcast program on the broadcast channel 3 (CH3). The broadcast programs received by the tuners 1 and 2 are recorded by the broadcast program record and playback unit 3 respectively.

In the example shown in FIG. 5A, as in the example shown in FIG. 4A, the broadcast channel 1 (CH1) is selected. If an instruction to switch the broadcast channel is input from the operation unit 13 in the above-mentioned state, then the source switch unit 9 is switched into a state of outputting a voice signal from the broadcast program record and playback unit 3, and the CM and the talks in the broadcast program received by the tuner 2 stored in the broadcast program record and playback unit 3 are excluded, and the broadcast program is played back from the breakpoint, that is, the start of music A, with a time shift as shown in FIG. 5B.

Thus, the user can listen to only the desired contents (for example, music A, B, ...) excluding the undesired contents (for example, CM and talks in a music program), thereby further improving the convenience.

Furthermore, the playback instruction section 21d can set specific contents to be excluded based on a specification from the operation unit 15, but also can set them based on the information stored in the user history database 11b in the non-volatile memory 11. For example, when there is a history that a user often excluded CM and talks by operating the operation unit 15 in the past, the playback instruction section 21d sets automatically CM and talks as contents to be excluded.

When the above broadcast channel is switched, the playback instruction section 21d sets a specific contents of the broadcast program based on the delimiter signal, and outputs an instruction to play back only the set contents from the breakpoint. That is, contrary to the function of excluding specific contents of the broadcast program, the contents the user requests to play back (listen to), for example, music A and B only shown in FIG. 5B can be played back.

Like the function of excluding the specific contents of the broadcast program, the playback instruction section 21d can set a specific contents based on the specification from the operation unit 15, and can automatically set them based on the information stored in the liking information database 11a in the non-volatile memory 11.

A database update section 21e has the function of updating the information stored in the liking information database 11a in the non-volatile memory 11 based on the operation contents in the vehicle audio system 100 of a user. Practically, based on the operation contents of various buttons of the operation unit 13, the information stored in the liking information database 11a in the non-volatile memory 11 is updated. For example, if a user selects music programs only through the operation unit 13, then the information that the user likes music is accumulated in the liking information database 11a. Furthermore, if the user does not listen to music programs until the end of the programs and uses the operation unit 13 to skip the music programs, the information that the user does not like a music program is accumulated. Thus, the accumulated information reflects more and more correctly the liking of the user.

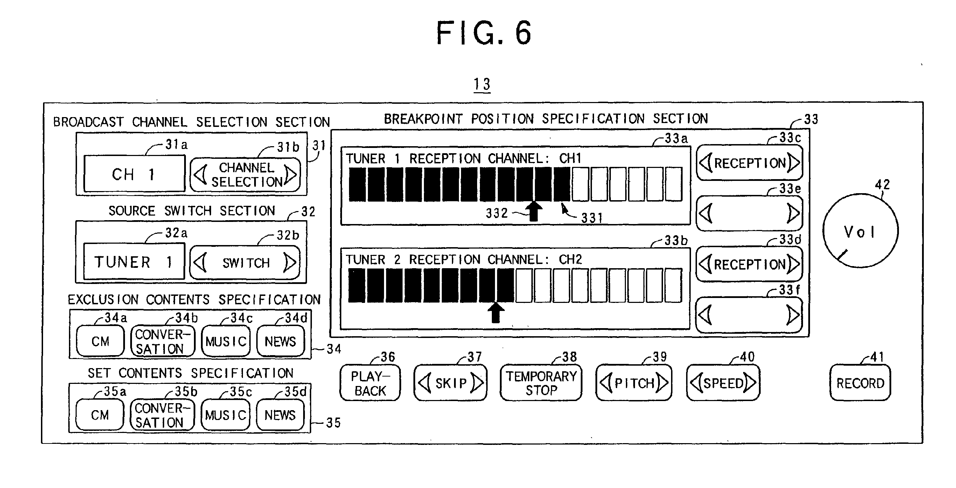

The operation unit 13 is configured by arranging various buttons for a user inputting a desired instruction and specification into the vehicle audio system 100 and a display panel for providing specific information for a user. For example, The operation unit 13 is mounted on the body of the vehicle audio system 100. FIG. 6 shows an example of the appearance of the operation unit 15. As shown in FIG. 6, the operation unit 13 is provided with a broadcast channel selection section 31, a source switch section 32, a breakpoint position specification section 33, an exclusion contents specification section 34, a set contents specification section 35, etc.

The broadcast channel selection section 31 is provided with a liquid crystal display section 31a displaying the broadcast channel being selected, and a channel selection button 31b. The channel selection button 31b has the function of the broadcast channel switch input device of the present invention. When the channel selection button 31b is pressed (any of the left and right arrow marks of the channel selection button 31b is pressed) by a user, the system control unit 12 detects it and switches the broadcast channel. The liquid crystal display section 31a displays the selected broadcast channel after switching in response to pressing the channel selection button 31b.

The source switch section 32 is provided with a liquid crystal display section 32a displaying the source being selected by the source switch unit 9, and a source switch button 32b. The source switch unit 9 is automatically switched by switching a broadcast channel as described above (for example, switching from the tuner 1 to the broadcast program record and playback unit 3). It is also possible for a user to optionally switch a source to be selected by using the source switch button 32b.

The breakpoint position specification section 33 is provided with liquid crystal display sections 33a and 33b indicating the storage capacity, etc. of the broadcast program record and playback unit 3, reception buttons 33c and 33d, and breakpoint position specification buttons 33e and 33f. Among them, the liquid crystal display section 33a, the reception button 33c, and the breakpoint position specification button 33e are provided for the tuner 1, and the liquid crystal display section 33b, the reception button 33d, and the breakpoint position specification button 33f are provided for the tuner 2. Since the tuners 1 and 2 have the same functions, the tuner 1 is explained for example.

A plurality of rectangular marks 331 displayed on the liquid crystal display section 33a indicate the storage capacity of an area storing a broadcast program from the tuner 1. A black rectangular mark 331 indicates a used area, and a white rectangular mark 331 indicates an unused area. There is a breakpoint of the contents of the above-mentioned broadcast program between the rectangular marks 331. An arrow mark 332 indicates the position of a file pointer for playback. That is, the position indicated by the arrow mark 332 corresponds to the position from which the recorded broadcast program is played back.

The reception button 33c is a button for setting a broadcast channel of a broadcast program received by the tuner 1.

The breakpoint position specification button 33e has the function of the breakpoint input device according to the present invention. When the breakpoint position specification button 33e is pressed (any of the left and right arrow marks of the breakpoint position specification button 33e is pressed) by the user, the system control unit 12 detects it, and the position of the breakpoint of the contents to be played back can be set. Furthermore, in response to pressing the breakpoint position specification button 33e, the arrow mark 332 displayed on the liquid crystal display section 33a moves left and right. In the example shown in FIG. 6, the delimiter signals "N1", "C1", "M1", ... as shown in the example in FIG. 2 can be displayed, as a result, the user can more easily specify the position of the breakpoint of the contents to be played back.

The exclusion contents specification section 34 is provided with a CM button 34a, a conversation button 34b, a music button 34c, and a news button 34d. The exclusion contents specification section 34 has the function of the exclusion contents input device of the present invention. Various buttons of the exclusion contents specification section 34 are pressed, the system control unit 12 detects it, and the contents to be excluded in the broadcast program are set. For example, when the CM button 34a and the conversation button 34b are pressed, CM and conversation are set as the contents to be excluded.

The set contents specification section 35 is provided with a CM button 35a, a conversation button 35b, a music button 35c, and a news button 35d. The set contents specification section 35 has the function of the set contents input device of the present invention. When various buttons of the set contents specification section 35 are pressed, the system control unit 12 detects it, and the contents to be played back of the broadcast program are set. For example, when the music button 35c is pressed, music is set as the contents to be played back.

The exclusion contents specification section 34 and the set contents specification section 35 are configured to be interlocked with each other. For example, when the CM button 34a of the exclusion contents specification section 34 is pressed, inconsistent settings can be avoided although the CM button 35a of the set contents specification section 35 is pressed.

Furthermore, the operation unit 13 is provided with a playback button 36, a skip button 37, a temporary stop button 38, a pitch button 39, a speed button 40, a record button 41, and a volume button 42. The playback button 36 is used by a user in optionally playing back a broadcast program recorded in the broadcast program record and playback unit 3. The skip button 37 is used in rewinding or fast-forwarding a recorded broadcast program during the playback of the broadcast program. The pitch button 39 is used in, for example, speeding up or slowing down the pitch of conversation during the playback of a recorded broadcast program. The speed button 40 is used in listening fast speed or slow speech during the playback of a recorded broadcast program. The record button 41 is used by a user in optionally recording a broadcast program on the broadcast channel being currently selected in the broadcast program record and playback unit 3 when the broadcast program on the broadcast channel being currently selected has not been recorded in the broadcast program record and playback unit 3 (for example, when the record instruction section 21c has not set it as a broadcast program to be recorded).

When a driver presses the playback button 36 to play back a broadcast program from the broadcast program record and playback unit 3, the broadcast program can obviously be played back from the breakpoint of the above-mentioned contents of the broadcast program. In this case, as described above, a broadcast program can be played back from the broadcast program record and playback unit 3 according to the settings by the exclusion contents specification section 34 and the set contents specification section 35, and according to the settings based on the liking information database 11a and the user history database 11b.

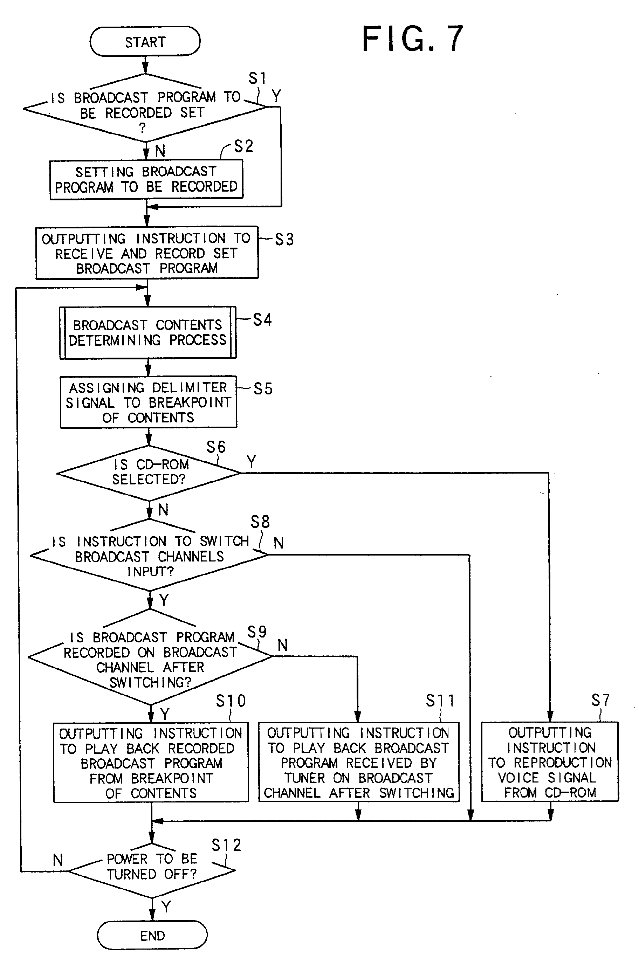

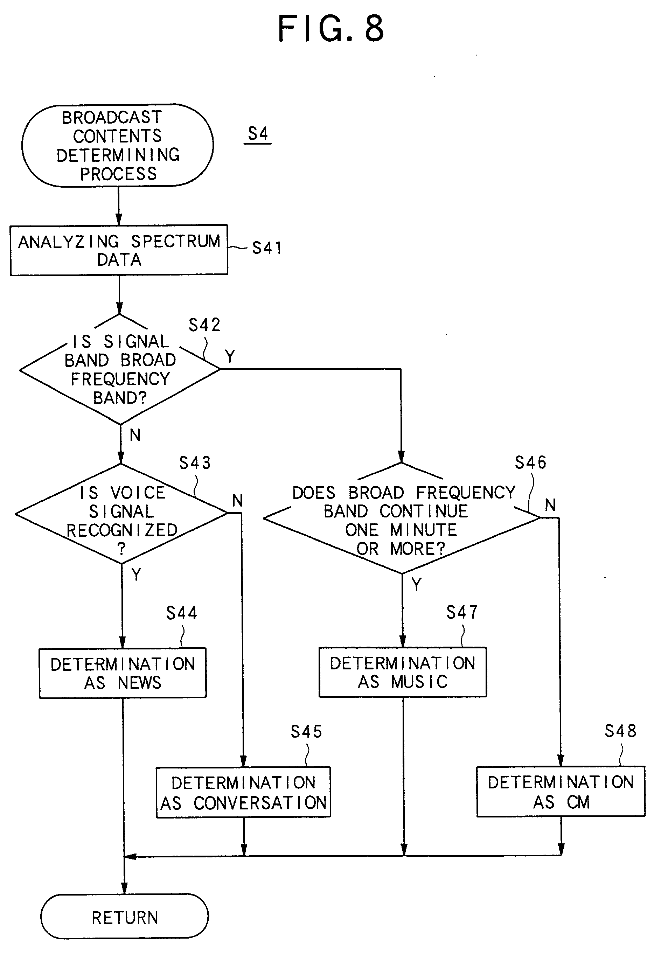

Then, the operation of the vehicle audio system 100 is described below by referring to FIGs. 7 and 8. FIG. 7 is a flowchart of the process performed by a CPU 21 on the portion of the system control unit 12 related to the present invention. FIG. 8 is a flowchart of the broadcast contents determining process in step S4 shown in FIG. 7.

The program of the process shown in FIG. 7 is, for example, stored in the ROM 22, and read by the CPU 21 for execution when power is turned on to start a vehicle engine. In the following explanation, when power is turned on, the tuner 1 receives a broadcast program on the broadcast channel (CH1), the program is output from a speaker through the source switch unit 9 and the amplifier 10, and the broadcast program received by the tuner 2 is a program on a back-channel.

In FIG. 7, first, the CPU 21 (record instruction section 21c) determines whether or not a broadcast program has already been set (step S1). For example, when power is turned on, the non-volatile memory 11 is referred to and it is determined whether or not a broadcast program to be recorded is set before power is turned on. If it is determined that a broadcast program to be recorded has not been set, the CPU 21 (record instruction section 21c) sets a broadcast program to be recorded and a broadcast channel based on the information stored in the liking information database 11a in the non-volatile memory 11 as described above (step S2). Thus, for example, a broadcast program on the broadcast channel 2 (CH2) being broadcast is set.

Next, the CPU 21 (record instruction section 21c) outputs to the tuner 2 an instruction to receive a set broadcast program, and outputs to the broadcast program record and playback unit 3 an instruction to record a broadcast program received by the tuner 2 (step S3). Thus, the broadcast program received by the tuner 2 is recorded by the broadcast program record and playback unit 3. At this time, the instruction to record the broadcast program received by the tuner 1 may be issued to the broadcast program record and playback unit 3 by the CPU 21.

Then, the broadcast contents determining process (step S4) shown in FIG. 8 is performed. In the broadcast contents determining process, as shown in FIG. 8, when the CPU 21 (broadcast contents determination section 21a) analyzes (when a broadcast program received by the tuner 1 is recorded, the spectrum data in a predetermined period provided by the FFT unit 6 is also analyzed) the spectrum data provided by the FFT unit 7 (step S41).

Based on the spectrum data, the CPU 21 (broadcast contents determination section 21a) determines whether or not the signal band of the broadcast program is a broad frequency band higher than a predetermined level. If it is determined that the signal band of the broadcast program is not a broad frequency band, for example, if the signal band is mainly the frequency of 1 kHz, then the CPU 21 (broadcast contents determination section 21a) determines whether or not the contents of the broadcast program can be easily recognized (step S43). Whether or not the contents of a broadcast program can be easily recognized can be checked by, for example, preparing reference spectrum data of an easily recognized signal (whose consonants are clear, fluctuation of tone is small, conversation speed is slow, etc.) and determining whether or not a difference from the reference is within a predetermined range.

When it is determined that the contents of a broadcast program can be easily recognized, the CPU 21 (broadcast contents determination section 21a) determines that the contents are news (step S44). On the other hand, if it is determined that the contents of the broadcast program cannot be easily recognized, then the CPU 21 (broadcast contents determination section 21a) determines that the contents are conversation (step S45).

If it is determined in step S42 that the signal band of the broadcast program is a broad frequency band, then the CPU 21 (broadcast contents determination section 21a) determines whether or not the broad frequency band continues one minute or longer (step S46). If it is determined that the broad frequency band continues one minute or longer, then the CPU 21 (broadcast contents determination section 21a) determines that the contents of the broadcast program is music (step S47). If the CPU 21 (broadcast contents determination section 21a) determines that the broad frequency band does not continue one minute or longer, then the CPU 21 (broadcast contents determination section 21a) determines that the contents of the broadcast program is CM (step S48).

Then, back in the process shown in FIG. 7, in step S5, the CPU 21 (delimiter signal assignment section 21b) assigns a delimiter signal to a breakpoint of the contents of the recorded broadcast program as shown in FIG. 3.

Next, the CPU 21 (playback instruction section 21d) determines whether or not the output from the CD-ROM drive is selected by the source switch unit 9 (step S6). If it is determined that the output from the CD-ROM drive 8 is selected, then an instruction to reproduce the voice signal recorded on the CD-ROM is issued to the CD-ROM drive 8 (step S7).

On the other hand, if it is determined that the output from the CD-ROM drive 8 is not selected, then the CPU 21 (playback instruction section 21d) determines whether or not an instruction to switch a broadcast channel has been input from the operation unit 13, that is, whether or not the channel selection button 31b has been pressed by the user (step S8). If it is determined that an instruction to switch a broadcast channel has been input, then the CPU 21 (playback instruction section 21d) determines whether or not a broadcast program has been recorded on the broadcast channel after switching (step S9). On the other hand, if it is determined that an instruction to switch a broadcast channel has not been input, then the CPU 21 (playback instruction section 21d) maintains the current playback status.

In step S9, if it is determined that a broadcast program has been recorded on the broadcast channel after switching, then the CPU 21 (playback instruction section 21d) refers to a delimiter signal assigned to a breakpoint of the contents of the broadcast program as described above by referring to FIG. 4B, outputs to the broadcast program record and playback unit 3 a playback instruction to play back the broadcast program from the breakpoint of the contents, and outputs to the source switch unit 9 a switch instruction to select the output from the broadcast program record and playback unit 3 (step S10). Thus, the recorded broadcast program is played back with a time shift from the broadcast program record and playback unit 3 through the source switch unit 9, etc. Forexample, when the channel selection button 31b is pressed, and the broadcast channel 1 (CH1) is switched into the broadcast channel 2 (CH2), the broadcast program of the broadcast channel 2 (CH2) received by the tuner 2 and recorded is played back with a time shift from the broadcast program record and playback unit 3 through the source switch unit 9, etc.

The position of a breakpoint from which a broadcast program is to be played back, and whether or not contents are to be excluded in playback are based on the settings of the operation unit 13. If a broadcast channel is to be switched in step S8, a broadcast program to be played back before switching can be faded out, and a broadcast program to be played back after switching can be faded in (fading in from a breakpoint of the contents of a broadcast program).

On the other hand, if it is determined in step S9 that a broadcast program has not been recorded on the broadcast channel after switching, for example, if the broadcast program on the broadcast channel 2 (CH2) set in step S2 is a broadcast program to be broadcast two hours later, then the CPU 21 (playback instruction section 21d) outputs to the source switch unit 9 an instruction to play back the broadcast program received by the tuner 2 on the broadcast channel 2 (CH2) after switching (step S11).

Thus, the source switch unit 9 is switched to select the output from the tuner 2. As a result, the broadcast program being broadcast and received by the tuner 2 is output through the source switch unit 9, etc. In addition, for example, when the broadcast channel 1 (CH1) is switched into the broadcast channel 5 (CH5) by the channel selection button 31b, the playback instruction section 21d outputs to the tuner 1 an instruction to receive the broadcast program on the broadcast channel 5 (CH5).

The processes from step S4 to step S12 are repeated until power is turned off (step S12).

As described above, according to the present embodiment, a broadcast program is not played back from the middle although broadcast channels are switched in the middle of the contents of the broadcast program, but it is played back from the breakpoint. Therefore, the user can easily understand the contents of the broadcast program. Especially when the contents of a broadcast program after switching broadcast channels are music or news, the user can listen to the music from the beginning in a good mood, or hear the news from an appropriate breakpoint. Therefore, time shift playback can be provided for the user with high convenience.

Additionally, since contents such as CM, conversation, etc. in a broadcast program on a broadcast channel after switching is automatically excluded, the time shift playback can be realized, the user'can reduce the laborious operation of, for example, fast-forwarding undesired contents.

Furthermore, since only favorite contents such as music, etc. of a user can be played back with a time shift in a broadcast program on a broadcast channel after switching, thereby reducing the laborious operation of the user searching for favorite contents.

According to the above-mentioned embodiment, a broadcast program to be recorded is set based on the information stored in the liking information database 11a, but all broadcast programs received by a tuner can be recorded by the broadcast program record and playback unit 3.

According to the embodiment, the two tuners 1 and 2 are provided as the reception device, but the number of tuners is not limited to two. That is, three or more tuners can be mounted within the gist of the present invention.

According to the above-mentioned embodiment, a broadcast program (voice signal) in a radio broadcast is received, but a broadcast program of a television broadcast (voice signal and picture signal) can also be received. With the configuration, the effect of the above-mentioned embodiment can also be obtained within the scope of the present invention.

Furthermore, according to the above-mentioned embodiment, the liking information database 11a can be provided individually for a plurality of drivers. In this case, for example, a plurality of operation buttons are provided for the operation unit 13 for clearly distinguishing the drivers from one another. A pressed operation button among the plurality of operations buttons recognizes a specific driver, and using the liking information database 11a corresponding to a recognized driver, the process by the record instruction section 21c and the playback instruction section 21d can be performed.

According to the above-mentioned embodiment, a vehicle audio system is an example of the program record and playback system of the present invention. However, the present invention is not limited to this example, but can be applied to other electronic systems.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A program record and playback system **characterized in that** the system (100) comprises:
a reception device (1) which receives broadcast program on a plurality of channels;
a record and playback device (3) which records and plays back the received broadcast program; and
a control device (12) which controls the reception, recording and playback of the broadcast program,
wherein the control device (12) comprises:
a broadcast contents determination device (21a) which determines contents of a broadcast program recorded by the record and playback device (3);
a delimiter signal assignment device (21b) which assigns a delimiter signal to a breakpoint of the contents of the recorded broadcast program; and
a playback instruction device (21d) which refers to the delimiter signal, and issues to the record and playback device (3) an instruction to play back the recorded broadcast program from the breakpoint of the contents.

2. The program record and playback system (100) according to claim 1, further comprising a broadcast channel switch input device (13) for inputting an instruction to switch broadcast channels by a user,
wherein when a broadcast channel switch instruction is input from the broadcast channel switch input device (13), the playback instruction device (21d) of the control device (12) refers to a delimiter signal assigned to a breakpoint of contents of a broadcast program recorded on a broadcast channel after switching , and issues an instruction to play back the broadcast program from the breakpoint of the contents to the record and playback device (3).

3. The program record and playback system (100) according to claim 1, further comprising a liking information database (11a) for storing user liking information about the broadcast program,
wherein the control device (12) further comprises a record instruction device (21c) which sets a broadcast program to be recorded based on the information stored in the liking information database (11a), issues an instruction to receive the set broadcast program to the reception device (1), and issues an instruction to record the set broadcast program to the record and playback device (3).

4. The program record and playback system (100) according to claim 3, further comprising a broadcast channel switch input device (13) for inputting an instruction to switch broadcast channels by a user,
wherein when a broadcast channel switch instruction is input from the broadcast channel switch input device (13) if a broadcast program on a broadcast channel after switching has been recorded, the playback instruction device (21d) of the control device (12) refers to a delimiter signal assigned to a breakpoint of contents of the broadcast program and issues an instruction to play back the broadcast program from the breakpoint of the contents to the record and playback device (3).

5. The program record and playback system (100) according to claim 3 or 4, wherein the broadcast program set by the record instruction device (21c) is referred to as a program on a back-channel.

6. The program record and playback system (100) according to any of claims 3 to 5, wherein the control device (12) further comprises database update device (21e) which updates information stored in the liking information database (11a) based on operation contents of the user.

7. The program record and playback system (100) according to claim 2 or 4, further comprising a breakpoint input device (13) for inputting an instruction to specify at least one breakpoint out of breakpoints of contents of the broadcast program by the user,
wherein the playback instruction device (21d) issues an instruction to play back the broadcast program from the breakpoint specified to the record and playback device (3).

8. The program record and playback system (100) according to claim 2 or 4, wherein the delimiter signal is discriminated depending on contents of the broadcast program, the playback instruction device (21d) excludes specific contents in the broadcast program based on the delimiter signal, and issues the instruction to play back the broadcast program from the breakpoint of the contents.

9. The program record and playback system (100) according to claim 8, further comprising a user history database (11b) for storing an operation history of the user,
wherein the playback instruction device (21d) sets the contents to be excluded based on the information stored in the user history database (11b).

10. The program record and playback system (100) according to claim 8, further comprising an exclusion contents input device (13) for inputting an instruction to specify the contents to be excluded by the user,
wherein the playback instruction device (21d) sets the contents to be excluded based on the instruction from the exclusion contents input device (13).

11. The program record and playback system (100) according to claim 2 or 4, wherein the delimiter signal is discriminated depending on the contents of the broadcast program, the playback instruction device (21d) sets specific contents of the broadcast program based on the delimiter signal, and issues the instruction to play back only the set contents from the breakpoint.

12. The program record and playback system (100) according to claim 11, further comprising a liking information database (11a) for storing user liking information about the broadcast program,
wherein the playback instruction device (21d) sets the specific contents based on the information stored in the liking information database (11a).

13. The program record and playback system (100) according to claim 11, further comprising a set contents input device (13) for inputting an instruction to specify the contents to be set by the user,
wherein the playback instruction device (21d) sets the specific contents based on the instruction from the set contents input device (13).

14. A program record and playback method **characterized in that** the method comprises:
a process of receiving broadcast program on a plurality of broadcast channels;
a process of recording the received broadcast program;
a process of determining contents of the recorded broadcast program;
a process of assigning a delimiter signal to a breakpoint of the contents of the recorded broadcast program; and
a process of referring to the delimiter signal, and playing back the recorded broadcast program from the breakpoint of the contents.

15. The program record and playback method according to claim 14, wherein when a broadcast channel switch instruction is input from a broadcast channel switch input device, a delimiter signal assigned to a breakpoint of contents of a broadcast program recorded on a broadcast channel after switching is referred, the broadcast program is played back from the breakpoint of the contents.

16. The program record and playback method according to claim 14, further comprising a process of setting the broadcast program to be recorded based on a user liking information about the broadcast program.

17. The program record and playback method according to claim 16, wherein when a broadcast channel switch instruction is input if a broadcast program on a broadcast channel after switching has been recorded, a delimiter signal assigned to a breakpoint of contents of the broadcast program is referred, and the broadcast program is played back from the breakpoint of the contents.
